# EUROPEAN PATENT APPLICATION

(11) **EP 1 788 796 A1**
(43) Date of publication of application: **23.05.2007**
(21) Application number: 04772444.8
(22) Date of filing: 30.08.2004
(51) Int. Cl.: H04N 1/41, H04N 7/30

(54) **IMAGE RESTORATION DEVICE, IMAGE RESTORATION METHOD, AND IMAGE RESTORATION PROGRAM**

(71) Applicant: FUJITSU LIMITED, Kawasaki-shi, Kanagawa 211-8588 (JP)
(72) Inventor: OKADA, Masaki, FUJITSU VLSI LIMITED, Kasugai-shi, Aichi 4870013 (JP); FUKUOKA, Tomohiro, FUJITSU VLSI LIMITED, Kasugai-shi, Aichi 4870013 (JP)
(74) Representative: Stebbing, Timothy Charles
(86) International application number: PCT/JP2004/012488
(87) International publication number: WO 2006/025090

(57) **Abstract**

Encoded data obtained by high-efficiency sequential encoding after an orthogonal transformation of image blocks each having a specified number of pixels are used. Preceding image decompression processing is performed on DC encoded data among the encoded data in a DC decompression processing section constituted by a DC decoding section 11A, a DC inverse quantization section 12A and a DC IDCT section 13A, so that an image is displayed. Subsequently, image decompression processing is performed on AC encoded data in addition to the DC encoded data in an AC decompression processing section constituted by an AC decoding section 11B, an AC inverse quantization section 12B and an AC IDCT section 13B, so that an image is displayed. With this procedure, in spite of use of encoded data encoded by a commonly used conventional sequential encoding technique, the same image displaying effect as of the data structure of the progressive encoding technique can be achieved and the displayed image can be sequentially refined.

## Description

### Technical Field

The present invention relates to decompression of image data encoded by use of an orthogonal transformation.

### Background Art

Patent Document 1 discloses an image coder decoder system. In this system, encoding and decoding of image data is performed after an orthogonal transformation with M pixels × M pixels serving as one block, and the transformation coefficient of each block is divided into N zones. In the i-th encoding (1 ≦ i ≦ N), the coefficients of the first to i-th zones among the coefficients which have undergone an orthogonal transformation are encoded into one screen of data and transmitted. In this way, the first to N-th encoded data are sequentially transmitted. N encodings start from encoding of a DC coefficient, and the degree of the transformation coefficient that is the zone at which the encoding is completed is incremented according to the number of encodings. On the decoding side, N items of data are respectively decoded as independent sequential-encoding-mode data, thereby obtaining the same image displaying effect as of progressive encoding. That is, the same image displaying effect as of progressive encoding can be achieved with a decoder for sequential encoding.

Patent Document 1: Japanese Unexamined Patent Publication No. 6(1994)233276

### Disclosure of the Invention

### Problems that the Invention is to Solve

Although the technique disclosed in Patent Document 1 enables it to achieve the same image displaying effect as of the progressive encoding technique by use of a decoder for sequential encoding, it requires a special encoding data structure when encoding image data. Specifically, the transformation coefficient of each block is divided into N zones that correspond to the lowest frequency component to the highest frequency component. In encoding of each zone, one screen of encoded data ranging from the DC component to the transformation coefficient of the zone is generated. Accordingly, a plurality of screens of encoded data for the first zone to the N-th zone, each zone having one screen of encoded data, have to be sequentially transmitted to and sequentially decoded by the decoder.

In conventional sequential encoding, an image is constructed by a sequence of encoded data ranging from the DC component to the high frequency component. In contrast with this, the technique disclosed in the above publication requires a combination of a plurality of sequences of encoded data for one image, and therefore special encoded data have to be prepared. This means that the desired image display function cannot be obtained without use of data encoded by a purpose-designed encoder. Therefore, the above technique has revealed the problem that it cannot be applied to data encoded by a commonly-used, conventional sequence encoding technique.

The image encoding/decoding disclosed in the publication has another disadvantage that since a plurality of streams of data encoded by sequential encoding have to be prepared for an image which usually requires one stream of data encoded by sequential encoding, the amount of necessary data inevitably increases. To process an increased amount of data, a large-scaled processor and a large-scaled storage area become necessary. Furthermore, the increased amount of data leads to an increase in the load imposed on the transmission path when transmitting the encoded data. That is, the technique of the above publication is likely to involve a complicated, large-scaled system configuration and leads to an increase in the load imposed on its transmission system.

### Means of Solving the Problems

The invention is directed to solving at least one of the problems of the prior art described earlier and a primary object of the invention is therefore to provide an image decompression system, image decompression method and image decompression program in which when decompressing encoded data encoded by a sequential encoding technique, the same effect as of the decompression of encoded data obtained by the progressive encoding technique can be achieved.

In order to achieve the above object, there is provided an image decompression system for reproducing image data from encoded data encoded on an image block basis after an orthogonal transformation which image block has a specified number of pixels, the system comprising:
a storage section for storing the encoded data;
a decompression processing section for decompressing the encoded data stored in the storage section;
wherein the decompression processing section performs preceding processing on all the image blocks to firstly decompress DC encoded data among the encoded data to reproduce the image data.

According to the image decompression system of the invention, encoded data encoded on an image block basis are stored in the storage section and when performing decompression processing to reproduce image data by the decompression processing section, the DC encoded data among the encoded data associated with all the image blocks are subjected to preceding decompression processing.

Further, there is provided an image decompression method or an image decompression program for reproducing image data from encoded data encoded on an image block basis after an orthogonal transformation which image block has a specified number of pixels, comprising the steps of:
storing the encoded data to be decompressed beforehand, and
decompressing DC encoded data associated with all the image blocks to reproduce the image data before decompression of AC encoded data among the stored encoded data.

According to the image decompression method or program of the invention, when performing decompression processing to reproduce image data from encoded data which have been encoded and stored on an image block basis, the DC encoded data among the encoded data associated with all the image blocks are decompressed prior to decompression of the AC encoded data.

### Effects of the Invention

In the above arrangement, the DC encoded data among the encoded data, which are encoded after an orthogonal transformation on an image block basis which image block has a specified number of pixels, are firstly processed, so that image data indicative of the average feature among the image data of the image blocks can be firstly decompressed. Thereafter, decompression processing is performed on the AC encoded data in addition to the DC encoded data, so that fine image data including the difference between the image blocks in terms of various factors such as color, brightness and hue can be decompressed. That is, prior to fine image reproduction, the average image data of the image blocks can be decompressed. As a result, progressive displaying can be accomplished in which the feature of the whole image is firstly displayed and then, a fine image is displayed.

In spite of the use of encoded data encoded on an image block basis by a sequential encoding technique commonly used as a standard encoding technique, the same image displaying effect as of the progressive encoding technique can be obtained when reproducing an image. Specifically, image data ranging from an immature image (which does not have satisfactory quality but provides the feature of the whole image) to a fine-quality image can be sequentially displayed, using encoded data encoded by a sequential encoding technique in which each image block has fine image data and fine image reproduction is carried out on an image block basis. Thereby, the same image displaying effect as of encoded data encoded by the progressive encoding technique can be achieved, which progressive encoding provides a rough whole image at the initial stage of image reproduction and gradually refines the image.

The invention provides an image decompression system, image decompression method and image decompression program in which when decompressing encoded data encoded by a commonly used sequential encoding technique, the DC encoded data among the image data are firstly decompressed so that the average image feature of the image blocks is firstly reproduced thereby enabling it to provide the feature of the whole image at an early stage, whereby the same image displaying effect as of the decompression of encoded data obtained by the progressive encoding technique can be achieved.

### Brief Description of Drawings

Fig. 1 is a circuit block diagram according to a first embodiment;
Fig. 2 is a circuit block diagram according to a second embodiment;
Fig. 3 is a flow chart according to a third embodiment;
Fig. 4 is a circuit block diagram of a DC decoding section;
Fig. 5 is a circuit block diagram of an AC decoding section; and
Fig. 6 is a conceptual diagram of grouping for dividing AC encoded data into multiple stages.

### Explanation of References

- 11A: DC decoding section
- 11B: AC decoding section
- 12A: DC inverse quantization section
- 12B: AC inverse quantization section
- 13A: DC IDCT section
- 13B: AC IDCT section
- 15: storage section
- 15A: encoded data storage area
- 15B: DC TEMP area
- 15C: AC TEMP area
- 15D: decompressed image storage area
- 21: decoding section
- 22: inverse quantization section
- 23: IDCT section
- 25: storage section
- 25A: encoded data storage area
- 25B: DC TEMP area
- 25C: AC TEMP area
- 26: selection section
- 27: DC selection section
- 28: AC selection section
- 41: block counter
- 42, 54: address generation section
- 43: DC table
- 44: AC table
- 45, 46: comparator
- 47: buffer
- 48: DC fetch section
- 49: makeup section
- 50: AC fetch section
- 53: boundary processing section

### Best Mode for Carrying out the Invention

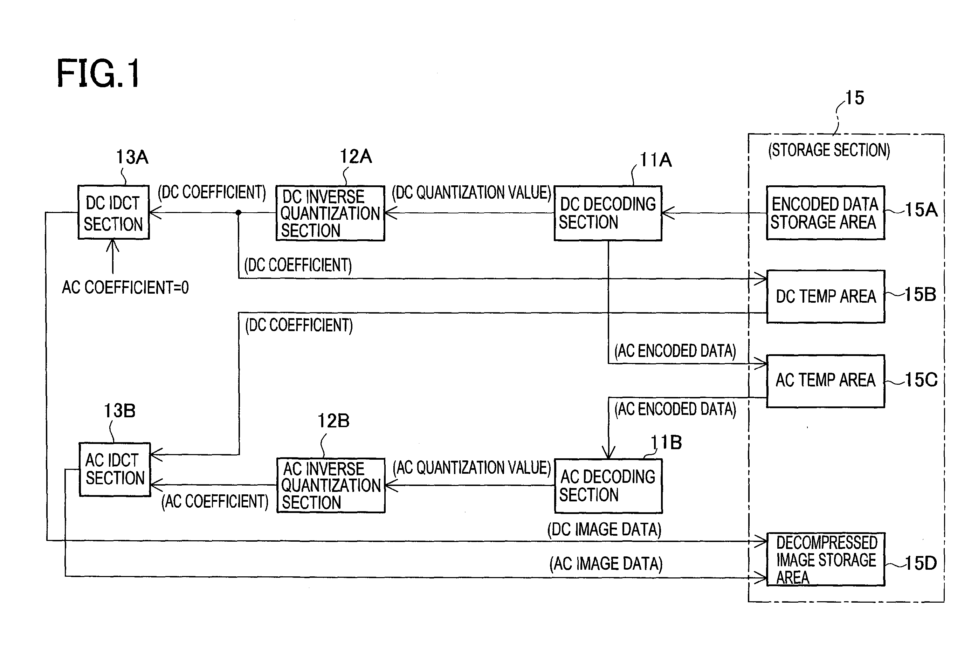

Referring now to Figs. 1 to 6 of the accompanying drawings, an image decompression system, image decompression method and image decompression program will be described in detail according to first to third embodiments of the invention.

Fig. 1 is a circuit block diagram of an image decompression system constructed according to the first embodiment. The circuit of this image decompression system is configured such that decompression processing for DC encoded data and decompression processing for AC encoded data are performed independently from each other when reproducing an image from encoded data.

A storage section 15 includes an encoded data storage area 15A for storing encoded data; a DC TEMP area 15B for temporarily storing DC encoded data; an AC TEMP area 15C for temporarily storing AC encoded data; and a decompressed image storage area 15D for storing decompressed image data.

The encoded data as stated herein means data obtained by encoding image data in image blocks after an orthogonal transformation, the image blocks each having a specified number of pixels. For instance, high-efficiency encoded data such as JPEG images are categorized as the above encoded data. In this case, the image block having a specified number of pixels is constituted by 8 × 8 pixels. The orthogonal transformation is DCT (discrete cosine transform) transformation and encoding is entropy encoding. One typical method of entropy encoding is Huffman coding. Image data is divided by DCT transformation into 64 blocks, i.e., one DC component (block 0) and 63 stages of AC component (blocks 1 to 63) ranging from the lowest frequency component to the highest frequency component. The DC component (block 0) indicates the average of the 8 × 8 pixels, whereas the AC components (blocks 0 to 63) indicate the difference between the image components of adjacent 8 × 8 pixel blocks.

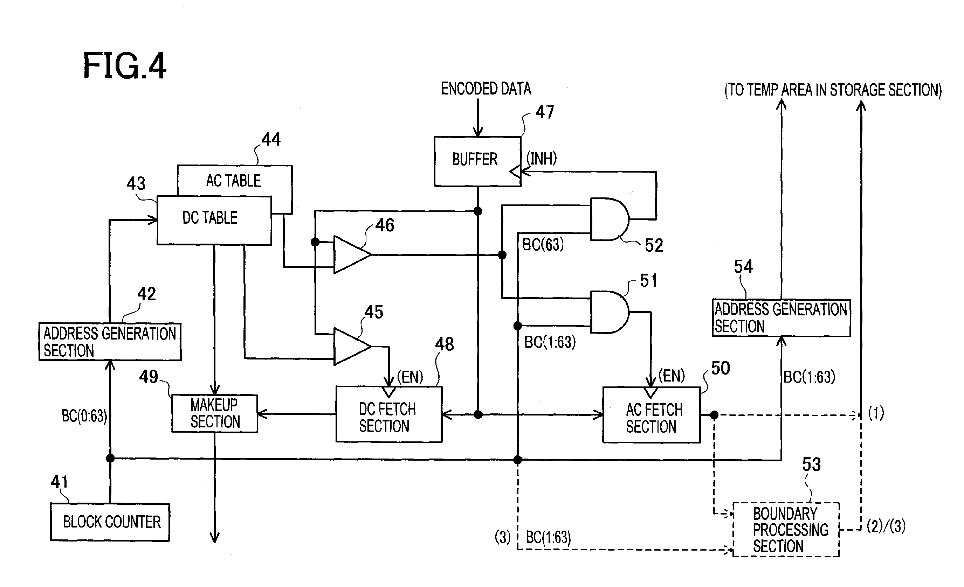

The encoded data are input to a DC decoding section 11A from the encoded data storage area 15A. Of the encoded data, the DC components are subjected to decoding processing. DC quantization values obtained by the decoding of the DC encoded data are output. Concurrently, AC encoded data are picked out. The picked-out AC encoded data are stored in the AC TEMP area 15C of the storage section 15. In this case, boundary processing (described later with reference to Fig. 4) may be sometimes applied to the data boundaries such that the AC encoded data of each image block can be distinguished.

The DC quantization values are input to a DC inverse quantization section 12A. DC coefficients are output by multiplying the DC quantization values by their corresponding DC quantization coefficients. In this case, as the DC quantization coefficients used for the multiplication of the DC quantization values, "1" may be selected. If quantization is done with DC quantization coefficients larger than "1" in the quantization phase, inverse quantization with "1" will degrade the dynamic range of the image. However, the inverse quantization operation performed herein is a process applied to DC quantization values as an initial stage of a process for obtaining the same image displaying effect as of the progressive encoding technique. Therefore, high accuracy is not required for image displaying and the multiplication operation can be simplified by reducing the quantization coefficients for multiplication to "1" as far as the feature of the whole image can be displayed. Thereby, the circuit scale can be reduced and a smoother progressive displaying effect can be achieved with high-speed arithmetic processing. It is apparent that the quantization coefficients are not limited to "1" but may take any other values provided that the above effect can be obtained.

The DC coefficients output from the DC inverse quantization section 12A are stored in the DC TEMP area 15B of the storage section 15 and input to a DC IDCT (inverse discrete cosine transform) section 13A. Also, a pseudo zero value is input to the DC IDCT section 13A as the AC coefficients. In the DC IDCT section 13A, IDCT (inverse discrete cosine transform) transformation is performed on the DCT coefficients associated with the DC coefficients only by which the feature of the original image is represented. DC image data output from the DC IDCT section 13A are stored in the decompressed image storage area 15D. The stored DC image data are displayed by a display unit and image displaying is performed with the DC components. In this case, various kinds of image processing can be performed by storing the DC image data in the decompressed image storage area 15D. In addition, the storage section 15 does not necessarily have the decompressed image storage area 15D for storing the DC image data. A configuration which enables the decompressed image data to be displayed on the display unit without change may be employed. Thereby, the storage area of the storage section 15 can be compressed.

In one example, the DC decoding section 11A, the DC inverse quantization section 12A and the DC IDCT section 13A constitute a DC decompression processing section. When decoding image data from the encoded data, the processing of the DC decompression processing section is firstly performed, so that the image data corresponding to the DC components which represent the feature of the image can be firstly obtained.

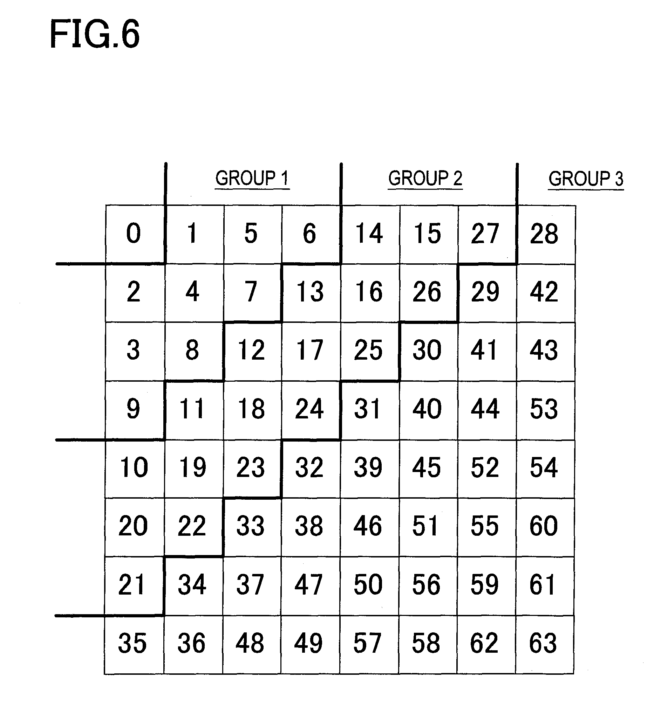

The AC encoded data stored in the AC TEMP area 15C are input to an AC decoding section 11B and undergo decoding processing therein. Herein, the AC encoded data stored in the AC TEMP area 15C are data picked out and stored by the DC decoding section 11A which operates firstly. The processing of an AC decompression processing section constituted by the AC decoding section 11B, the AC inverse quantization section 12B and an AC IDCT section 13B is performed concurrently with or subsequently from the processing of the DC decompression processing section, after the processing is performed by the DC decoding section 11A of the DC decompression processing section described earlier. The AC decoding section 11B not only can decode all the AC encoded data at a time but also can decode predetermined frequency components step by step. The latter decoding will be described in detail with reference to Figs. 6 and 7. Thanks to the stepwise decoding, the sequentially decompressed images contain sequentially increasing frequency components so that much smoother progressive displaying becomes possible. The AC decoding section 11B outputs AC quantization values.

The AC quantization values are input to the AC inverse quantization section 12B. The AC quantization values are multiplied by the AC quantization coefficients, thereby outputting AC coefficients. In the case where the AC encoded data are stepwise decoded, the AC quantization coefficients used for the multiplication of the AC quantification values may be "1" in the transitional stage of image displaying. If quantization has been done with AC quantification coefficients greater than "1", the dynamic range of the image will be decreased. Unlike the normal case, the inverse quantification operation performed herein is the intermediate process of image displaying for obtaining the same image displaying effect as of the progressive technique and therefore high accuracy is not required for image displaying of the frequency components displayed at that time. Therefore, the quantification coefficients used for the multiplication can be decremented to "1" as far as the feature of the whole image can be displayed, thereby simplifying the multiplication. Thereby, the circuit scale can be reduced and a smoother progressive displaying effect can be achieved with high-speed arithmetic processing. It should be noted that the quantization coefficients are not limited to "1" but may take any other values provided that the above effect can be obtained.

The AC coefficients output from the AC inverse quantification section 12B are input to the AC IDCT section 13B together with the DC coefficients stored in the DC TEMP area 15B of the storage section 15. In the AC IDCT section 13B, IDCT (inverse discrete cosine transform) transformation is performed on the DCT coefficients including both the DC coefficients and the AC coefficients. The image data output from the AC IDCT section 13B is stored in the decompressed image storage area 15D and displayed.

In one example, the AC decoding section 11B, the AC inverse quantification section 12B and the AC IDCT section 13B constitute the AC decompression processing section. The processing for decompressing the encoded data to reproduce image data is performed subsequently from the processing performed by the DC decompression processing section, whereby image data including the AC components in addition to the DC components can be obtained. In the case where the AC components are processed step by step, the DCT coefficients based on the DC coefficients to which the AC coefficients are sequentially added are sequentially subjected to IDCT transformation, so that a finer progressive displaying effect can be attained.

In the first embodiment, encoded data of sequential encoding are used, which data are obtained by high-efficiency encoding, i.e., Huffman coding applied to every image block having a specified number of pixels (i.e., 8 × 8 pixels) after an orthogonal transformation, i.e., DCT transformation is performed. In the DC decompression processing section constituted by the DC decoding section 11A, the DC inverse quantization section 12A and the DC IDCT section 13A, image decompression processing is firstly performed on the DC encoded data among the encoded data so that an image is displayed. Subsequently, the AC decompression processing section constituted by the AC decoding section 11B, the AC inverse quantification section 12B and the AC IDCT section 13B performs image decompression processing on the AC encoded data in addition to the DC encoded data. Thereby, the same image displaying effect as of the data structure of the progressive encoding technique can be achieved by use of encoded data encoded by a commonly used conventional sequential encoding technique and the image can be sequentially refined. In this case, when sequentially performing the decompression processing on the encoded data including the AC components, the AC component being processed in the stepwise decompression processing transitions to a higher frequency component, whereby a smoother progressive displaying effect can be achieved.

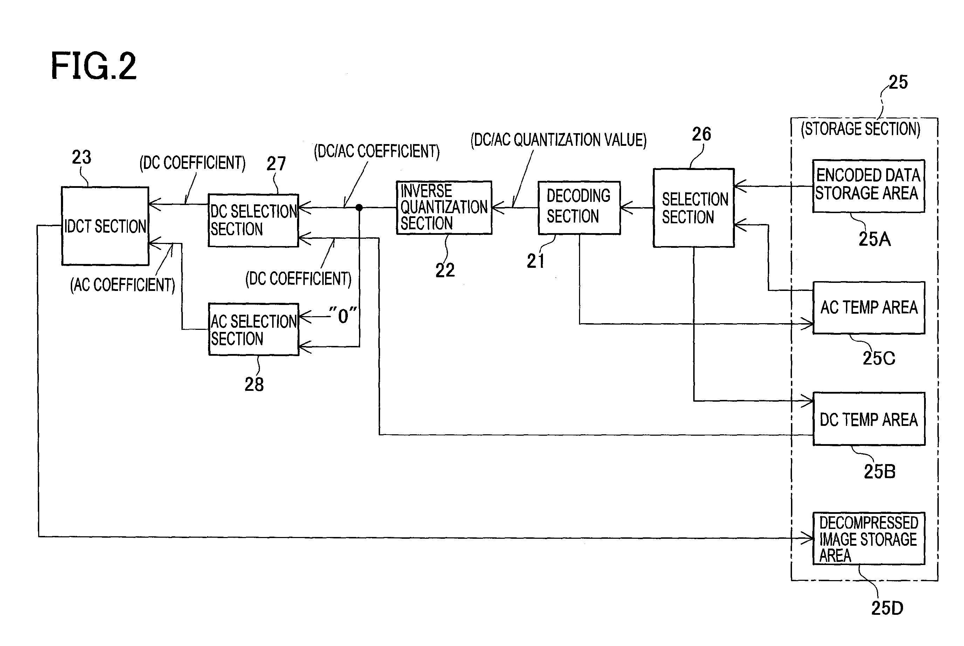

Fig. 2 is a circuit block diagram of an image decompression system constructed according to the second embodiment. For decompressing encoded data to reproduce image data, DC/AC encoded data are processed with a decoding section 21, an inverse quantization section 22 and an IDCT section 23, which are provided in common for DC/AC encoded data. In one example, the decoding section 21 and the inverse quantization section 22 constitute a preliminary decompression processing section, and the IDCT section 23 constitutes an inverse orthogonal transformation section. The circuit configuration of this case is such that the DC encoded data or the AC encoded data are arbitrarily selected and supplied by a selection section 26, which exemplifies a first selection section, to perform decompression processing.

According to the second embodiment, the selection section 26 is positioned between a storage section 25 and the decoding section 21. Either a path through which encoded data are supplied from an encoded data storage area 25A or a path through which AC encoded data are supplied from an AC TEMP area 25C is selected.

The decoding section 21 has both functions of the DC decoding section 11A and the AC decoding section 11B. That is, when the path connected to the encoded data storage area 25A has been firstly selected by the selection section 26 to input the encoded data to the decoding section 21, the DC encoded data among the encoded data are decoded to output the DC quantization values. At that time, the boundary processing (described later) is performed on the AC encoded data according to need and then, the AC encoded data are stored in the AC TEMP area 25C.

If the path connected to the AC TEMP area 25C is selected and the AC encoded data on which the boundary processing has been performed according to need in the preceding step are input, the input AC encoded data are decoded. At that time, it is possible to divide the AC encoded data by the boundary processing such that the processing range extends step-wise toward a higher frequency component. Decoding is performed at every boundary to output DC/AC quantization values.

The DC/AC quantization values, which have been decoded in the decoding section 21, are output to the DC TEMP area 25B, a DC selection section 27 and an AC selection section 28, after being subjected to inverse quantization in the inverse quantization section 22. When firstly calculating the DC coefficients, the DC coefficients are stored in the DC TEMP area 25B while being selected by the DC selection section 27 to be sent to the IDCT section 23. At the same time, zero is selected by the AC selection section 28 as the AC coefficients and sent to the IDCT section 23. In the IDCT section 23, an image having the feature of the DC coefficients is decompressed. When calculation involving the AC coefficients is subsequently performed, the DC coefficients are selected from the DC TEMP area 25B by the DC selection section 27 and sent to the IDCT section 23. At the same time, the AC coefficients are calculated in the inverse quantization section 22 and sent to the IDCT section 23. In the IDCT section 23, an image having the feature of the AC coefficients in addition to the DC coefficients is decompressed.

For obtaining the same function and effect as that of the first embodiment, it is useful to make the quantization coefficients smaller than the normal quantization coefficient (that may take the value of "1") in the inverse quantization section 22.

Similarly to the first embodiment, the second embodiment is designed such that the decompression processing can be performed by the decoding section 21, the inverse quantization section 22 and the IDCT section 23, using encoded data of sequential encoding obtained by high-efficiency encoding, i.e., Huffman coding applied to every image block having a specified number of pixels (i.e., 8 × 8 pixels) after an orthogonal transformation, i.e., DCT transformation is performed. In this case, the DC coefficients calculated from the encoded data selected by the selection section 26 are selected by the DC selection section 27, while zero is selected as the AC coefficients in the AC selection section 28, and the DC encoded data indicative of the feature of the image are firstly subjected to the image decompression processing to display an image. Subsequently, the DC coefficients stored in the DC TEMP area 25B are selected by the DC selection section 27 whereas the AC coefficients output from the inverse quantization section 22 are selected by the AC selection section 28, and the image decompression processing is performed on the data ranging from the DC encoded data which represent the feature of the image to the AC encoded data, so that an image is displayed. Thereby, the image displaying effect of the data structure of the progressive encoding technique can be achieved, that is, a progressively refined image is displayed. In this case, a finer and smoother progressive displaying effect can be achieved by sequentially performing decompression while stepwise extending the range of AC components to be processed toward a higher frequency component in the decompression processing of encoded data including the AC components.

According to the second embodiment, the decoding section 21, the inverse quantization section 22 and the IDCT section 23 can be shared between the image decompression processing of the DC encoded data and the image decompression processing of the AC encoded data and therefore the circuit scale can be compressed, compared to the first embodiment that requires an individual circuit configuration for each processing.

According to the first and second embodiments, the DC encoded data are firstly processed, whereas the AC encoded data are picked out by the DC decoding section 11A (or the decoding section 21) and then stored in the AC TEMP area 15C (or 25C). The AC encoded data stored in the AC TEMP area 15C (25C) are entropy-coded data, i.e., compressed data including the feature of DCT transformed image data. Even if the storage region is limited to the storage area 15 (25), storing can be easily done using the AC TEMP area 15C (25C). Herein, if the encoded data stored in the storage section 15 (25) are temporary and do not need to be retained after image decompression, the AC TEMP area 15C (25C) may be set up so as to overlap the encoded data storage area 15A (25A) and after the DC decoding section 11A (the decoding section 21) performs processing on encoded data, the encoded data may be written over the AC encoded data which have been subjected to the boundary processing according to need. This makes it possible to reduce the area of the storage section 15 (25).

If the storage section 15 (25) has a sufficient storage space, a sufficient space can be kept for the AC TEMP area 15C (25C) to process the AC encoded data concurrently with image processing of the DC encoded data and store the AC quantization values and the AC coefficients. Thereby, the processing of the AC components can be half-done beforehand so that the decompression processing of the image including the AC components can be performed at high speed.

Although it has been described that the DC coefficients calculated in the preceding DC encoded data processing are stored in the DC TEMP area 15B (15C), other arrangements are possible. For instance, the DC quantization values are prestored and when calculating the AC components, the DC quantization values may be supplied to the AC inverse quantization section 12B (or the inverse quantization section 22) together with the AC quantization values.

Although it has been described that zero is supplied as the AC coefficients to the DC IDCT section 13A (or the IDCT section 23) in the DC component processing, zero may be supplied as the AC coefficients to the DC inverse quantization section 12A (or the inverse quantization section 22).

Inverse quantization operation with the inverse quantization coefficients at the midterm stage being set to "1" is to multiply the quantization values by "1". More specifically, this means that in the processing at the midterm stage, the calculated quantization values are supplied as they are to the DC IDCT section 13A and the AC IDCT section 13B (or the IDCT section 23) without performing arithmetic processing in the DC inverse quantization section 12A and the AC inverse quantization section 12B (or the inverse quantization section 22).

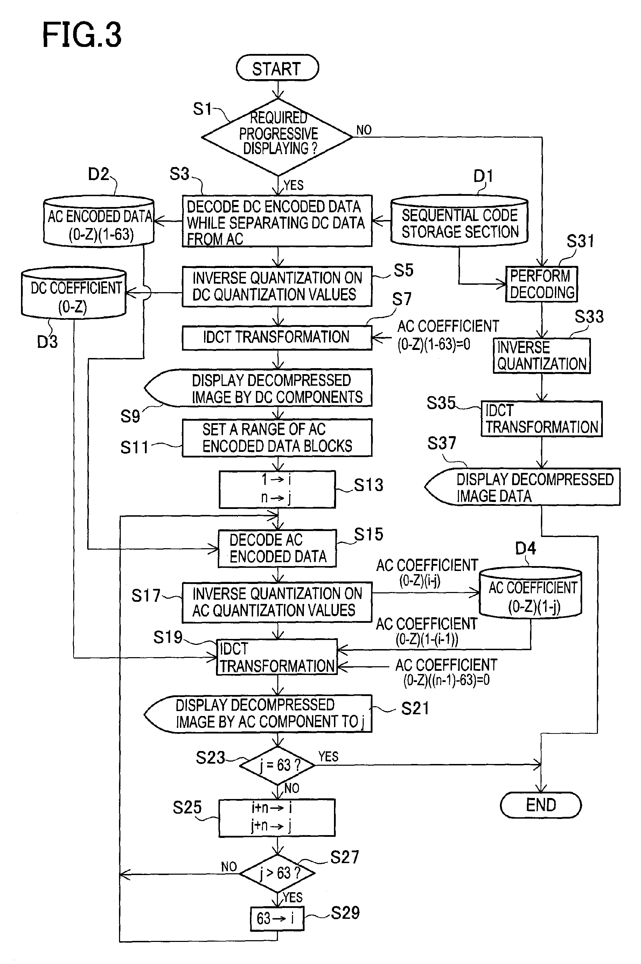

Fig. 3 is a flow chart of data processing with a software according to the third embodiment of the invention.

After starting image decompression processing, a check is made to determine whether the image displaying required is progressive displaying (S1). If it is determined that progressive displaying is not required (S1: NO) but normal sequential displaying is to be performed, encoded data encoded by sequential encoding are read out from a sequential code storage section D1, and after performing decoding (S31), inverse quantization (S33) and IDCT transformation (S35) on each image block, the decompressed images are displayed on an image block basis (S37).

If progressive displaying is required (S1: YES), encoded data encoded by sequential encoding are read out from the sequential code storage section D1 and the DC encoded data are decoded while separating the DC encoded data from the AC encoded data, and then, the separated AC encoded data are stored in an AC encoded data storage section D2 (S3). In the AC encoded data storage section D2, the AC encoded data (0 to 63) are stored on all the image blocks (0 to Z) on the screen, which AC encoded data are divided into 63 blocks ranging from the lowest to highest frequency components. The DC encoded data which have been decoded are sent to Step S5 as DC quantization values.

In Step S5, inverse quantization is performed on the DC quantization values, thereby calculating DC coefficients. The DC coefficients are stored in a DC coefficient storage section D3. Specifically, in the DC coefficient storage section D3, the DC coefficient for each image block (0 to Z) on the screen is stored. The DC coefficients are also sent to Step S7.

In Step S7, zero is allocated to all the AC coefficients (0 to 63) associated with the calculated DC coefficients of the image blocks (0 to Z) and IDCT transformation is performed. Since zero is allocated to the AC coefficients of all the image blocks, the calculation of IDCT transformation at Step S7 can be simplified and performed at high speed. Thereby, a decompressed image represented by the DC components is obtained. This image does not represent the small differences between the images of the image blocks but roughly expresses the feature of the average image of the image blocks (S9). Steps S3 to S9 are sequentially performed on all the image blocks, thereby performing the first stage of the progressive displaying. The feature of the whole image on the screen is roughly displayed.

Next, image decompression processing is performed on the encoded data including the AC encoded data. First, a range of AC encoded data blocks on which image decompression processing is to be performed at a time is set, being selected from the blocks 1 to 63 corresponding to 63 stages of frequency components (S11) . At Step S11, this range is set as n. Then, initialization is performed to make the minimum value i be 1 (i = 1) and the maximum value j be n (j = n) (S13), and then, the AC encoded data stored in the AC encoded data storage section D2 are decoded to output AC quantization values (S15) .

At Step S17, inverse quantization is performed on the AC quantization values, thereby calculating the AC coefficients. The AC coefficients are stored in an AC coefficient storage section D4. In the AC coefficient storage section D4, the AC coefficients of the range of blocks 1 to j out of the image blocks (0 to Z) on the screen are stored.

At Step S19, for each of the image blocks (0 to Z), the AC coefficients (0 to Z) (1 - (i - 1)), which have been calculated according need and stored in the AC coefficient storage section D4, are read out in addition to the DC coefficients calculated at Step S17. Then, zero is allocated to the AC coefficients (0 - Z) ((n + 1) - 63) which have not been calculated and IDCT transformation is performed. At the same time, IDCT transformation is performed on the DC coefficients stored in the DC coefficient storage section D3. Thereby, the decompressed image represented by the DC components and the AC components of the specified range is obtained. The reproduced image represents the feature of the AC components of the specified range. Compared to the image displaying based on only the DC components (S9), a finer image can be obtained (S21).

A check is made to determine whether the maximum value j of the AC encoded data to be subjected to image decompression processing is 63 that indicates the maximum block of the AC encoded data. If the maximum value j has reached 63 (j = 63) (S23: YES), the image decompression processing is completed. If it has not reached 63 (j ≠ 63) (S23: NO), n is added to the minimum value i and the maximum value j (S25), and then the program makes the shift to the next image decompression processing. If the maximum value j to which n has been added exceeds 63 (S27 : YES), the maximum value j is set to 63 (S29) and the program returns to Step S15 to repeat the image decompression processing after the AC component range is extended again.

Steps S15 to S19 are performed on all the image blocks (0 to Z) while serially extending the AC component range, so that the displayed image is more and more refined in the progressive displaying. Thereby, displaying in which the image of the whole screen gradually becomes finer can be accomplished.

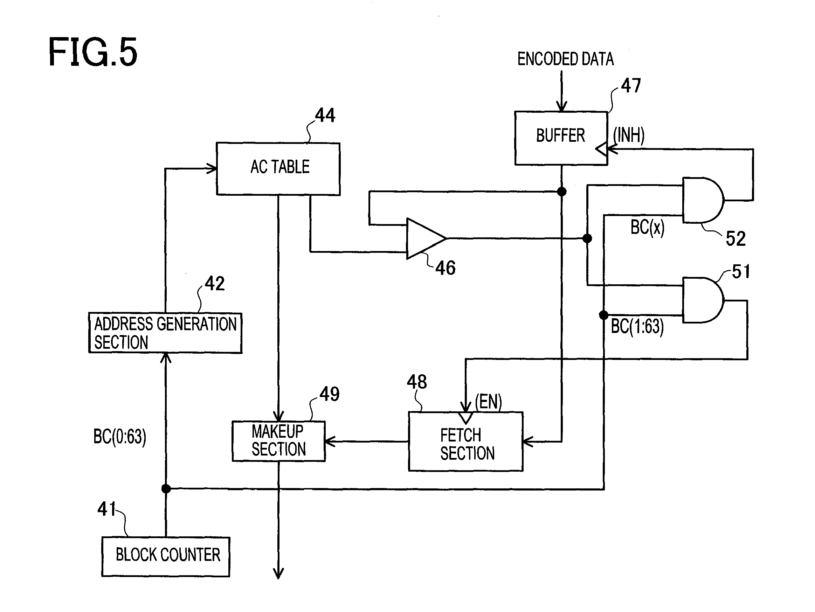

Figs. 4 and 5 show circuit block diagrams of the DC decoding section 11A and AC decoding section 11B, respectively, of the first embodiment.

First, the DC decoding section 11A shown in Fig. 4 will be explained. The DC decoding section 11A performs not only the decoding of the DC encoded data but also the processing in which the AC encoded data are picked out and subjected to the boundary data processing according to need and then stored in the AC TEMP area 15C.

The DCT transformed image data is divided, as discussed earlier, into one stage of DC encoded data (block 1) and 63 stages of AC encoded data (blocks 1 to 63) ranging from the lowest frequency component to the highest frequency component, and the block counter 41 is for counting the block value of each stage. Count values BC (0 to 63) are input to an address generation section 42; count values BC (1 to 63) are input to an address generation section 54, an AND gate 51 and a boundary processing section 53 (in the case of Condition (3) described later); and a count value BC (63) is input to an AND gate 52.

The address generation section 42 generates an address for designating a Huffman code in a DC table 43 or AC table 44 each time it receives a count value (0 to 63). To determine which one of the plurality of Huffman codes matches each encoded data piece, the address value sequentially varies in response to the count values BC (0 to 63).

Huffman codes are sequentially designated by addresses from the address generation section 42, and comparators 45, 46 makes a comparison between each Huffman code and each encoded data piece taken in a buffer 47. A Huffman code selected from the DC table 43 is input to the comparator 45 to be compared with the DC encoded data. Huffman codes selected from the AC table 44 are input to the comparator 46 to be compared with the AC encoded data.

If the comparator 45 detects that an encoded data piece matches the Huffman code stored in the DC table, the matching encoded data piece is determined to be DC encoded data and a DC fetch section 48 is determined to be in an enable state. The encoded data piece for comparison stored in the buffer 47 is sent to a makeup section 49 through the DC fetch section 48. The makeup section 49 inputs an additional bit corresponding to the Huffman code determined to be coincident and the DC encoded data which has been determined to be coincident is decoded.

After the detection of the matching Huffman codes in the AC table by the comparator 46, the determination result is input to the AND gates 51, 52. Since the count values BC (1 to 63) are input to the other one terminal of the AND gate 51 and the count value BC (63) is input to the other one terminal of the AND gate 52, the AND gate 51 releases a signal to an AC fetch section 50 to bring it into the enable state relative to each of the count values BC (1 to 63) and the matching encoded data are determined to be the AC encoded data corresponding to the count values BC (1 to 63) and therefore can be input. The AND gate 52 brings the buffer 47 into a disable state relative to the count value BC (63) so that inputting of encoded data is inhibited. Therefore, the input of data associated with one image block to the DC decoding section 11A is inhibited.

The AC encoded data input through the AC fetch section 50 are stored in the AC TEMP area 15C of the storage section 15 in three kinds of ways.

In the first method (1), the AC encoded data input through the AC fetch section 50 are stored in the AC TEMP area 15C without change. The AC encoded data which have been input from the buffer 47 through the AC fetch section 50 are stored in the storage areas designated by the addresses generated by the address generation section 54 according to the count values BC (1 to 63).

According to the second method (2), the boundaries of the serially input AC encoded data are subjected to data processing in the boundary processing section 53 and then the AC encoded data are stored. Specifically, the boundaries of the AC encoded data following the DC encoded data are processed such that they become detectable.

The leading encoded data piece (block 0) of a series of encoded data (blocks 0 to 63) of one image block is DC encoded data. This data piece has been identified prior to others and decoded in the makeup section 49 through the DC fetch section 48. Although the encoded data input through the AC fetch section 50 are only the AC encoded data of the blocks 1 to 63, a pseudo encoded data is added in front of the leading AC encoded data in place of the original DC encoded data, the pseudo encoded data corresponding to the Huffman code having the shortest bit train among the encoded data indicative of DC encoded data. Since the pseudo encoded data to be added is fixable in a desired position of a bit train, it can be automatically added in front of the leading AC encoded data in the boundary processing unit 53.

According to the third method (3), the boundary processing section 53 performs grouping processing on 63 stages of AC encoded data (blocks 1 to 63), starting from the lowest frequency component (block 1), such that they are divided into a plurality of groups each having a specified number of blocks. When performing the image decompression processing on the data including the AC encoded data, the range of AC encoded data to be decompressed is sequentially extended toward the highest frequency component, thereby enabling finer progressive displaying. In the boundary processing unit 53, the extension of the AC encoded data range is done according to the count values BC (1 to 63) . The AC encoded data divided into groups are stored in the locations designated by the addresses which are generated on a group basis in the address generation section 54 according to the count values BC (1 to 63). Fig. 6 shows one example of the division of the encoded data into groups and Fig. 7 shows one example of the data processing performed on the group boundaries. Figs. 6 and 7 will be described later.

Although not shown in the circuit block diagram of Fig. 4, the leading address of the encoded data stored in the encoded data storage area 15A and the bit position of the AC encoded data within the encoded data may be obtained based on the matching-comparison with the DC table 43 and the AC table 44 by the comparators 45, 46. This obviates the need to perform operation for storing the identified AC encoded data in the AC TEMP area 15C, using the AC fetch section 50, the boundary processing section 53, the address generation section 54 and others. The identified AC encoded data can be read out from the encoded data storage area 15A as the occasion arises.

The address generation section 54 generates addresses for the AC encoded data to be stored which data have been identified and subjected to the boundary processing according to need. Specifically, an address is generated each time a count value BC (1 to 63) is released from the block counter, so that a series of AC encoded data is sequentially stored in the AC TEMP area 15C.

Fig. 5 shows a circuit block diagram of the AC decoding section 11B. The AC decoding section 11B is intended for use in decoding of the AC encoded data. Unlike the DC decoding section 11A shown in Fig. 4, it does not need the DC table 43, the comparator 45, the AC fetch section 50, the boundary processing section 53 and the address generation section 54.

A fetch section 48 is provided in place of the DC fetch section 48 of the DC decoding section 11A and is brought into an enable state according to an output signal from the AND gate 51 instead of an output signal from the comparator 45. The AC encoded data which have been sequentially subjected to matching/determination upon release of the sequential counter values BC (1 to 63) are input to the makeup section 49 through the fetch section 48. In the AND gate 52, a count value BC (X) is input instead of the count value BC (63). The count value BC (X) as stated herein means a value indicative of the block value of the trailing one of the series of AC encoded data to be divided into groups. In response to the block value indicative of the trailing end of the groups, the buffer 47 is brought into an input inhibition state. Therefore, the decoding processing can be performed on each group of the AC encoded data.

Fig. 6 shows a table in which encoded data pieces obtained by the DCT transformation performed on image data of 8 × 8 pixels are arranged by the so-called zigzag scan technique. The block 0 at the upper left end corresponds to the DC encoded data. The block 1 at the immediate right of the block 0 to the block 63 at the lower right end correspond to the AC encoded data. Zigzag scan is performed on the block 1 to the block 9 which belong to Group 1; the block 10 to the block 27 which belong to Group 2; and the block 28 to the block 63 which belong to Group 3.

In this case, the boundary processing is performed on the boundaries of the groups. For instance, if runs of zeros exist in the groups striding over their boundaries such as zero-run-length (ZRL), the trailing end of the preceding group is replaced with an EOB code. Code setting for the head of the succeeding groups is done in accordance with the number of remaining runs of zeros.

As seen from the foregoing description, this embodiment is such that, the image data indicative of the average feature among all the image data can be firstly decompressed by performing an orthogonal transformation such as DCT transformation on each image block having specified number of pixels (such as 8 × 8 pixels) and then firstly performing the image decompression processing on the DC encoded data among the sequential encoded data encoded by e.g., Huffman Coding. Thereafter, the AC encoded data are added to the DC encoded data and the decompression processing operation is performed to reproduce fine image data including gradation of color, brightness and hue. Prior to decompression of fine image data, average image data can be decompressed so that the same image displaying effect as of the progressive displaying technique can be achieved.

In spite of use of encoded data encoded on an image block basis with a sequential encoding technique that is widely used as a standard image encoding technique, the invention achieves the same displaying effect as of the image reproduction of encoded data compressed by the progressive encoding technique when reproducing an image. Further, a series of image data can be sequentially displayed, which image data ranges from an immature image (which does not have satisfactory quality but provides the feature of the whole image) to a fine-quality image.

Although encoded data compressed by the commonly used sequential technique is employed, an image indicative of the average image feature is firstly reproduced so that the user can grasp the feature of the whole image at an early stage.

The image decompression processing of the invention performed on the DC encoded data is applicable not only as the first stage of the progressive displaying but also to cases where the outline of the contents of an image is searched. In the latter case, the effect of displaying a searched image at high speed can be obtained. For instance, the image decompression processing of the invention is applicable to the index displaying function of e.g., a digital still camera.

In addition to the effects described above, the following effects can be attained. Specifically, by step-wise decoding data pieces having specified frequency components among the AC encoded data, the sequentially decompressed image can include higher frequency components so that smoother progressive displaying becomes possible. When performing inverse quantization, the quantization coefficient to be used in the multiplication is decremented to "1", thereby eliminating the need to perform the inverse quantization operation. Thereby, the circuit scale can be reduced and a smoother progressive displaying effect can be achieved with high-speed arithmetic processing. In addition, as discussed in the second embodiment, the decoding section 21, the inverse quantization section 22, and the IDCT section 23 are shared between the image decompression processing of the DC encoded data and the image decompression processing of the AC encoded data, so that the circuit scale can be reduced. When performing the IDCT processing, zero is assigned to other AC coefficients than those to be subjected to the decompression processing, so that the calculation of the IDCT processing can be simplified, which also contributes to high speed processing operation.

It is apparent that the invention is not necessarily limited to the particular embodiments shown herein and various changes and modifications are made to the disclosed embodiments without departing from the scope of the invention.
Although the invention has been discussed with the case where the image decompression processing is applied to only the DC encoded data as the first stage of the process for achieving the effect of the progressive displaying, the invention is not limited to this. As the first stage of the process for achieving the effect of the progressive displaying, the image decompression processing may be performed on the DC encoded data plus the AC encoded data of low frequency components.

## Claims

1. An image decompression system for reproducing image data from encoded data encoded on an image block basis after an orthogonal transformation which image block has a specified number of pixels, the system comprising:
a storage section for storing the encoded data;
a decompression processing section for decompressing the encoded data stored in the storage section;
wherein the decompression processing section performs preceding processing on all the image blocks to firstly decompress DC encoded data among the encoded data to reproduce the image data.

2. The image decompression system according to claim 1, further comprising:
a block counter for counting the encoded data constituting each image block in conjunction with the decompression processing,
wherein the decompression processing section performs the decompression processing on the encoded data ranging from the DC encoded data to AC encoded data in response to an instruction from the block counter released upon completion of the preceding processing performed on all the image blocks.

3. The image decompression system according to claim 2,
wherein a range of AC encoded data to be decompressed is stepwise extended toward the AC encoded data of the high frequency component, each time the decompression processing is performed on all the image blocks.

4. The image decompression system according to claim 1,
wherein the decompression processing section comprises:
a DC decompression processing section for decompressing the DC encoded data; and
an AC decompression processing section for decompressing the AC encoded data among the encoded data.

5. The image decompression system according to claim 4, further comprising:
a block counter for counting the encoded data constituting each image block in conjunction with the decompression processing,
wherein a range of AC encoded data to be processed in the AC decompression processing section is stepwise extended toward the AC encoded data of the high frequency component, each time the decompression processing is performed on all the image blocks.

6. The image decompression system according to claim 4,
wherein the DC decompression processing section further comprises:
an identification section configured to input the encoded data to pick out the AC encoded data therefrom; and
a boundary processing section for performing data processing on the boundaries of the picked-out AC encoded data before storing the picked-out AC encoded data in the storage section, and
wherein the AC decompression processing section inputs the AC encoded data stored in the storage section.

7. The image decompression system according to claim 4,
wherein the DC decompression processing section performs the decompression processing after allocating zero to the AC encoded data.

8. The image decompression system according to claim 4,
wherein the DC encoded data are stored in the storage section, and the AC decompression processing section performs the decompression processing on the DC encoded data stored in the storage section in addition to the AC encoded data.

9. The image decompression system according to claim 5,
wherein the DC encoded data and/or the AC encoded data which have been processed in the AC decompression processing section are stored in the storage section, and the AC decompression processing section performs the decompression processing on the DC encoded data and/or the AC encoded data which are stored in the storage section in addition to the AC encoded data to be processed.

10. The image decompression system according to claim 4,
wherein the DC and AC encoded data are DC and AC entropy encoded data,
wherein the DC decompression processing section and the AC decompression processing section comprise:
a decoding section for decoding the DC and AC entropy encoded data;
an inverse quantization section for inversely quantizing the data decoded by the decoding section; and
an inverse orthogonal transformation section for inversely transforming the data which have been inversely quantized by the inverse quantization section, and
wherein the inverse orthogonal transformation section reproduces the image data.

11. The image decompression system according to claim 10,
wherein when performing the decompression processing on the DC encoded data, the quantization coefficients used in the inverse quantization section are "1".

12. The image decompression system according to claim 10, further comprising:
a block counter for counting the encoded data constituting each image block in conjunction with the decompression processing,
wherein if the range of AC encoded data to be decompressed is stepwise extended toward the AC encoded data of the high frequency component, each time the decompression processing is performed on all the image blocks, the quantization coefficients used in the inverse quantization section for the AC encoded data that are out of the range are "1".

13. The image decompression system according to claim 1,
wherein the decompression processing section comprises:
a preceding stage decompression processing section for decompressing orthogonally transformed data corresponding to the encoded data;
an inverse orthogonal transformation section for inversely transforming the orthogonally transformed data; and
a first selection section for selecting either the encoded data or the AC encoded data among the encoded data.

14. The image decompression system according to claim 13, further comprising:
a block counter for counting the encoded data constituting each image block in conjunction with the decompression processing,
wherein a range of AC encoded data to be processed is stepwise extended toward the AC encoded data of the high frequency component, each time the decompression processing is performed on all the image blocks.

15. The image decompression system according to claim 13,
wherein the preceding stage decompression processing section comprises:
an identification section for picking out the AC encoded data when the encoded data selected by the first selection section are input to the preceding stage decompression processing section; and
a boundary processing section for performing data processing on the boundaries of the picked-out AC encoded data before the picked-out AC encoded data are stored in the storage section,
wherein the preceding stage decompression processing section further is input the AC encoded data stored in the storage section, selected by the first selection section.

16. The image decompression system according to claim 13,
wherein the inverse orthogonal transformation section performs the decompression processing after allocating zero to the AC orthogonally transformed data among the orthogonally transformed data in conjunction with selection of the DC encoded data among the encoded data by the first selection section.

17. The image decompression system according to claim 13,
wherein the DC orthogonally transformed data obtained by the preceding processing among the orthogonally transformed data are stored in the storage section, and the inverse orthogonal transformation section performs the decompression processing on the DC orthogonally transformed data stored in the storage section in addition to the AC encoded data selected among the encoded data by the first selection section.

18. The image decompression system according to claim 14,
wherein the DC orthogonally transformed data and/or AC orthogonally transformed data which have been decompressed among the orthogonally transformed data are stored in the storage section, and the inverse orthogonal transformation section performs the decompression processing on the DC orthogonally transformed data and/or AC orthogonally transformed data which are stored in the storage section in addition to AC encoded data newly selected as an object to be processed by the first selection section.

19. The image decompression system according to claim 13,
wherein the encoded data are entropy encoded data,
wherein the preceding stage decompression processing section comprises:
a decoding section for decoding the entropy encoded data; and
an inverse quantization section for inversely quantizing the data decoded by the decoding section; and
wherein the inverse quantization section decompresses the orthogonally transformed data.

20. The image decompression system according to claim 19,
wherein when decompressing the DC encoded data among the encoded data, the quantization coefficients used in the inverse quantization section are "1".

21. The image decompression system according to claim 19, further comprising:
a block counter for counting the encoded data constituting each image block in conjunction with the decompression processing,
wherein if the range of AC encoded data to be processed is stepwise extended toward the AC encoded data of the high frequency component, each time the decompression processing is performed on all the image blocks, the quantization coefficients used in the inverse quantization section for the AC encoded data that are out of the range are "1".

22. An image decompression method for reproducing image data from encoded data encoded on an image block basis after an orthogonal transformation which image block has a specified number of pixels, the method comprising the steps of:
storing the encoded data to be decompressed beforehand, and
performing preceding decompression processing on DC encoded data associated with all the image blocks, before decompressing AC encoded data among the stored encoded data.

23. The image decompression method according to claim 22,
wherein after the preceding decompression processing performed on the DC encoded data of all the image blocks that constitute an image, decompression processing is performed on a range of encoded data covering the DC encoded data to the AC encoded data.

24. The image decompression method according to claim 22, comprising the steps of:
picking out the AC encoded data in conjunction with the preceding decompression processing performed on the DC encoded data;
performing data processing on the boundaries of the picked-out AC encoded data before storing the picked-out AC encoded data; and
performing the decompression processing on the stored AC encoded data after the preceding decompression processing is performed on the DC encoded data of all the image blocks that constitute an image.

25. The image decompression method according to claim 22, wherein when performing the decompression processing on the DC encoded data, zero is allocated to the AC encoded data.

26. The image decompression method according to claim 22, the method comprising the steps of:
storing the DC encoded data and/or the AC encoded data which have been decompressed, and
when performing the decompression processing on the AC encoded data to be processed, decompressing the DC encoded data and/or the AC encoded data in addition to the AC encoded data to be processed.

27. The image decompression method according to claim 23,
wherein a range of AC encoded data to be processed is stepwise extended toward the AC encoded data of the high frequency component, each time the decompression processing is performed on all the image blocks.

28. The image decompression method according to claim 23,
wherein the decompression processing includes inverse quantization processing, and
wherein the quantization coefficients used in the inverse quantization processing for the AC encoded data that are out of the range are "1".

29. An image decompression program for reproducing image data from encoded data encoded on an image block basis after an orthogonal transformation which image block has a specified number of pixels, the program comprising the steps of:
storing the encoded data to be decompressed beforehand, and
decompressing DC encoded data associated with all the image blocks to reproduce the image data before decompression of AC encoded data among the stored encoded data.
